# EUROPÄISCHE PATENTSCHRIFT

(11) **EP 3 262 379 B1**
(45) Veröffentlichungstag und Bekanntmachung des Hinweises auf die Patenterteilung: **01.04.2020**
(21) Anmeldenummer: 16704462.7
(22) Anmeldetag: 16.02.2016
(51) Int. Cl.: G01D 4/00

(54) **VERFAHREN ZUR ZUORDNUNG VON MESSKNOTEN WIE INTELLIGENTEN ZÄHLERN ZU NIEDERSPANNUNGSNETZEN**
METHOD FOR ASSIGNING MEASURING NODES SUCH AS SMART METERS TO LOW-VOLTAGE NETWORKS
PROCÉDÉ D'ATTRIBUTION DE NOEUDS DE MESURE TELS QUE DES COMPTEURS INTELLIGENTS À DES RÉSEAUX BASSE TENSION

(30) Priorität: 27.02.2015 AT 501592015
(43) Veröffentlichungstag der Anmeldung: 03.01.2018
(73) Patentinhaber: Siemens AG Österreich, 1210 Wien (AT)
(72) Erfinder: DIWOLD, Konrad, 1180 Wien (AT); MOSSHAMMER, Ralf, 1020 Wien (AT)
(74) Vertreter: Maier, Daniel Oliver
(86) Internationale Anmeldenummer: PCT/EP2016/053233
(87) Internationale Veröffentlichungsnummer: WO 2016/135004

(56) Entgegenhaltungen:
- DE-A1-102010 001 198
- GB-A- 2 488 164
- US-A1- 2009 045 976

## Beschreibung

Die Erfindung betrifft ein Verfahren zur Zuordnung von Messknoten wie intelligenten Zählern zu Niederspannungsnetzen.

Ähnliche Verfahren sind aus DE 10 2010 001 198 A1, GB 2488164 A oder US 2009/0045976 A1 bekannt.

Zur Verarbeitung von Messdaten aus einem Niederspannungsnetz müssen dort ausgebrachte Messknoten wie beispielsweise intelligente Zähler eindeutig zuordenbar sein.

Diese Zuordnung steht der sogenannten Middleware - einer intelligenten Schicht zwischen der Anwendungsebene und der Mess- und Steuer-Ebene - zur Verfügung und ermöglicht es, eingehende "Smart Meter"- Daten, d.h. die von den Intelligenten Zählern erfassten Daten hinsichtlich ihrer Netzzugehörigkeit zu klassifizieren, weiterzuverarbeiten und zu Head-End Systemen geordnet weiterzureichen.

Im Rahmen der Automatisierung des Verteilernetzbetriebs ist eine manuelle Zuordnung der in Niederspannungsnetzen installierten Intelligenten Zähler in den einzelnen Middleware-Systemen nicht mehr wirtschaftlich möglich.

Daraus ergibt sich ein Problem für die Middleware, die eine Vielzahl von Sensordaten mehrerer Netzgebiete verarbeitet wobei die Zugehörigkeit des den Daten zugrunde liegenden Sensors festgestellt werden muss.

Neben dem damit verbundenen erheblichen Zeit- und Kostenaufwand stellt sich auch das Problem der Fehleranfälligkeit dieses Zuordnungsprozesses.

Der Erfindung liegt die Aufgabe zugrunde, eine verbesserte Lösung für den Zuordnungsprozess anzugeben.

Erfindungsgemäß geschieht dies mit einem Verfahren gemäß Anspruch 1.

Die erfindungsgemäße automatische Zuordnung von Messknoten zu Niederspannungsnetzen ermöglicht es diese Messknoten ohne manuelles Engineering in ein Middleware-System einzubinden. Außerdem ermöglicht es die dynamische Integration von neuen Sensoren in die Middleware während des Betriebs. Bei bereits zugeordneten Sensoren kann die beschriebene Methode auch verwendet werden um Fehlverhalten von Sensoren bzw. kritische Netzzustände (d.h. die Aktivität des Sensors zeigt sehr unterschiedliche Charakteristiken zu anderen Sensoren im selben Netz) zu identifizieren.

Zur Umsetzung der beschriebenen Methode sind keine Daten von Sensoren bzw. Transformatoren notwendig, welche diese nicht ohnehin an das Middleware-System schicken.

Weiterhin ist die Methode stabil gegenüber Änderungen des Kommunikationskanals, bzw. unabhängig von den Kanal- und Protokollbedingungen, da ausschließlich die Aktivität der Messung von Relevanz ist, sie ist stabil gegenüber eventuellen Glättungsverfahren (z.B. Mittelung) des gemessenen Wertes, die schnelle Wertänderungen (z.B. aufeinanderfolgende Schaltvorgänge des Transformators) ausschleifen und somit schwer erkennbar machen würden und unabhängig von der genauen Art des Schwellwertes/der Datenflusslimitierung, solange alle am Verfahren beteiligten Sensoren diesbezüglich den gleichen Mechanismen unterworfen sind.

Die Erfindung wird anhand einer Figur näher erläutert, die schematisch ein erfindungsgemäßes Beispiel zeigt.

Der erfindungsgemäße Lösungsansatz zur Middleware-basierten Zuordnung von Meßknotendaten zu Niederspannungsnetzen basiert auf der Erkenntnis, dass Zähleraktivitäten in einem Niederspannungsnetz korrelieren, mit anderen Worten, die Aktivität eines Zählers weist ein gewisses Maß der Übereinstimmung mit der Aktivität der anderen Zähler in demselben Niederspannungsnetz auf.

Erfindungsgemäß werden nun die Messdaten der zuzuordnenden intelligenten Zähler über einen vorgegebenen Zeitraum erfasst , aus den erfassten Daten Aktivitätsmuster der Zähler ermittelt, die Aktivitätsmuster miteinander glichen und ein Maß der Übereinstimmung ermittelt und aus dem Maß der Übereinstimmung der Aktivitätsmuster eine Zuordnung der intelligenten Zähler bestimmt.

Ein Vorteil der erfindungsgemäßen Methode besteht darin, dass sie ausschließlichen von der tatsächlichen Netzdynamik abhängig ist, da Messknoten zur Bandbreitenoptimierung üblicherweise ihre Daten nur bei signifikanten Änderungen aussenden.

Die Messung der Zähleraktivität ist somit ein direkter Indikator der Netzdynamik. Die Methode ist damit unabhängig sowohl von der Beschaffenheit eines Kommunikationskanals und auch von den eigentlichen Messwerten.

Um eine Zuordnung von Intelligenten Zählern zu einzelnen Niederspannungsnetzen zu erhalten, bedarf es der Messdaten über einen längeren Zeitraum, beispielsweise eines ganzen Tages.

Anhand dieser Messdaten kann das Aktivitätsmuster eines Zählers (d.h. sein Sendeverhalten) über den Zeitraum ermittelt werden
(siehe Beispieltabelle: Zähleraktivität in 5 Minuten Intervallen).

| | Zähler1 | .. | Zähler n |
|---|---|---|---|
| .. | .. | .. | .. |
| 12:00 - 12:05 | 9 | .. | 7 |
| 12:05 - 12:10 | 3 | .. | 9 |
| .. | .. | .. | .. |

Die Aktivitätsmuster der einzelnen Zähler können nun in Korrelation zu einander gesetzt werden, wobei Untersuchungen zeigen, dass die Aktivitätsmuster von Zählern aus gleichen Netzen viel stärker korrelieren, als die Aktivitätsmuster von Sensoren aus unterschiedlichen Netzen.

Erfindungsgemäß kann durch Auswertung des mittels Korrelationsverfahren ermittelten Maßes der Übereinstimmung des Aktivitätsmusters eines Zählers mit dem Aktivitätsmuster von Referenzzählern, d.h. Zählern, deren Netzzuordnung bekannt ist durchgeführt werden.

Erfindungsgemäß werden zur Bestimmung der Netzzugehörigkeit auch Transformatordaten der infrage kommenden Netze verwendet. Für jedes Netz werden anhand der Transformatorinformationen die Zeitpunkte ermittelt, an denen eine Stufenstellung stattgefunden hat.

Stufenstellungen mittels Stufenschalter werden bei Transformatoren zwischen Mittel- und Niederspannung angewendet. Damit werden die bei Belastungsänderungen auftretenden Spannungsschwankungen ausgeglichen, indem das Übersetzungsverhältnis des Transformators geändert wird.

Die Stufenstellungen lösen in den Netzen starke Aktivitäten und damit besonders ausgeprägte Aktivitätsmuster aus.

Daher werden die Aktivitätsmuster der Zähler bevorzugt in einem Intervall um diese Zeitpunkte bestimmt.

Zum Beispiel wird bei einem Intervall von 10 Minuten und einer Stufenschaltung in Netz 1 zum Zeitpunkt 12:34 für jeden Sensor die Aktivität im Zeitraum 12:24-12:44 bestimmt. Man erhält dadurch TransformatorAktivitätsfingerabdrücke der einzelnen Intelligenten Zähler.

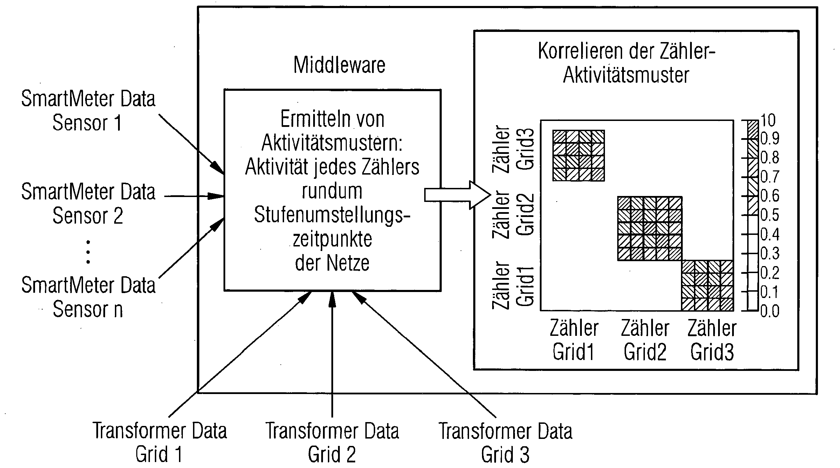

Figur 1 zeigt eine schematische Darstellung des erfindungsgemäßen Verfahrens wobei in der Middleware eines Energieversorgungsnetzes, also der intelligenten Schicht zwischen der Anwendungsebene und der Mess- und Steuer-Ebene ,die von den Intelligenten Zählern erfassten und gesendeten Daten *SmartMeter Data Sensor 1, SmartMeter Data Sensor 2,... SmartMeter Data Sensor n,* und die Informationen über Schaltvorgänge der Transformatoren *Transformer Data Grid 1, Transformer Data Grid 2, Transformer Data Grid 3* erfasst und zu Aktivitätsmustern *Activity Fingerprint* verarbeitet werden und aus den Aktivitätsmustern Übereinstimmungsmaße ermittelt werden und daraus die Zugehörigkeit der Zähler zu Niederspannungsnetzen *Grid 1, Grid 2, Grid3* bestimmt wird.

## Patentansprüche

1. Verfahren zur Zuordnung von Messknoten wie intelligenten Zählern zu Niederspannungsnetzen, **dadurch gekennzeichnet, dass** die Messdaten der zuzuordnenden intelligenten Zähler über einen vorgegebenen Zeitraum erfasst werden, dass aus den erfassten Messdaten Aktivitätsmuster der Zähler ermittelt werden, dass die Aktivitätsmuster der jeweiligen Zähler in Korrelation zueinander gesetzt und mittels eines Korrelationsverfahrens ein Maß der Übereinstimmung ermittelt wird und dass aus dem Maß der Übereinstimmung der Aktivitätsmuster eine Netzzuordnung der intelligenten Zähler bestimmt wird, wobei die vorgegebenen Zeiträume zum Vergleich der Messdaten der zuzuordnenden intelligenten Zähler an Schaltvorgängen in Transformatoren des jeweiligen Netzes ausgerichtet werden.

## Claims

1. Method for assigning measuring nodes such as smart meters to low-voltage networks, **characterised in that** the measured data of the smart meters to be assigned is captured over a predetermined period, activity patterns of the meters are determined from the captured measured data, the activity patterns of the respective meters are correlated with one another and a degree of agreement is determined by means of a correlation procedure, and from the degree of agreement of the activity patterns a network assignment of the smart meters is determined, wherein the predetermined periods for the comparison of the measured data of the smart meters to be assigned are aligned to switching operations in transformers of the respective network.

## Revendications

1. Procédé pour l'attribution de nœuds de mesure, tels que des compteurs intelligents, à des réseaux basse tension, **caractérisé en ce que** les données de mesure des compteurs intelligents visés par l'attribution en question sont enregistrées au cours d'un laps de temps prédéfini ; **en ce que**, à partir des données de mesure enregistrées, on détermine des modèles d'activité des compteurs ; **en ce que** les modèles d'activité des compteurs respectifs sont mis en corrélation les uns avec les autres et, au moyen d'un procédé de corrélation, on détermine une mesure de la concordance ; et **en ce que**, à partir de la mesure de la concordance des modèles d'activité, on détermine une attribution de réseau pour les compteurs intelligents ; dans lequel les laps de temps prédéfinis sont destinés à la comparaison des données de mesure des compteurs intelligents visés par l'attribution en question à des opérations de commutation dans des transformateurs du réseau respectif.
